# EUROPEAN PATENT SPECIFICATION

(11) **EP 2 583 851 B1**
(45) Date of publication and mention of the grant of the patent: **06.04.2016**
(21) Application number: 12188854.9
(22) Date of filing: 17.10.2012
(51) Int. Cl.: B60K 11/08

(54) **GRILLE SHUTTER APPARATUS**
GITTERVERSCHLUSSVORRICHTUNG
APPAREIL D'OBTURATION À GRILLE

(30) Priority: 17.10.2011 JP 2011228154
(43) Date of publication of application: 24.04.2013
(73) Proprietor: AISIN SEIKI KABUSHIKI KAISHA, Kariya-shi, Aichi-ken 448-8650 (JP)
(72) Inventor: Hori, Kenji, Kariya-shi, Aichi-ken, 448-8650 (JP)
(74) Representative: Winter, Brandl, Fürniss, Hübner, Röss, Kaiser, Polte - Partnerschaft mbB

(56) References cited:
- EP-A1- 2 327 579
- DE-A1- 3 151 435
- DE-A1-102009 032 592
- FR-A1- 2 404 557
- GB-A- 1 160 749

## Description

### TECHNICAL FIELD

This disclosure generally relates to a grille shutter apparatus.

### BACKGROUND DISCUSSION

A known grille shutter apparatus is disclosed in JPS58-139519U (hereinafter referred to as Patent reference 1). The known grille shutter apparatus disclosed in Patent reference 1 is configured to control a flow rate of air flowing into an inside of a vehicle body from a grille opening portion arranged at a front portion of the vehicle body in accordance with an opening/closing operation of a movable fin provided at the grille opening portion.

Specifically, for example, in a case where the vehicle is running at a high speed, an aerodynamic performance (for example, "Cd value", that is, coefficient of drag) of the vehicle is improved by limiting an inflow of the air flowing into the inside of the vehicle by establishing a closed state of the movable fin. In addition, when an engine starts, warm-up time is shortened by reducing the flow rate introduced into a radiator of the vehicle. When an engine temperature tends to rise, an open state of the movable fin is established, and thus the flow rate flowing into an inside of an engine room is increased, so that the engine temperature is controlled at an appropriate temperature.

Most of the grille shutter apparatuses having the above-described structure or a structure similar thereto include plural movable fins arranged in rows arranged in parallel to each other. In a case where each movable fin is in a closed state, an end portion (a fin end) of each movable fin overlaps with the end portion of the movable fin of the adjacent row, so that the air flowing in the inside of the vehicle body may be efficiently blocked.

The above-described high blocking performance, however, may also cause lack of the flow rate of the air flowing into the inside of the vehicle body in a case where each movable fin is locked in a fully-closed state due to, for example, a system failure. As a result, a cooling performance may be deteriorated at the engine or other portions that are heated. In this regard, the known grille shutter apparatus still leaves room for improvement.

A need thus exists for a grille shutter apparatus which restricts reduction of effects obtained by setting a movable fin in a fully-closed state, and which takes necessary air into an inside of a vehicle body.

Document GB 1160 749 discloses an apparatus according to the preamble of claim 1.

### SUMMARY

According to an aspect of this disclosure, a grille shutter apparatus is described in claim 1.

According to the above-described structure, the air may be taken into the inside of the vehicle body via the intake passage even in the fully-closed state. As a result, heated portions of, for example, an engine, that need to be cooled are efficiently cooled down even in a case where each movable fin is locked in the fully-closed state due to, for example, a system failure.

In addition, based upon a consideration of effects obtained when each movable fin is in the fully-closed state, including, for example, improvement in an aerodynamic performance, it is desirable that the air flow via the intake passage is restricted in a case where there is no need to positively take in the air.

In this regard, most of the air flowing from the grille opening portion is utilized for improving the aerodynamic performance because, as described above, each intake passage extends in the direction intersecting with the inflow direction of the air, thereby restricting the air flow which is created as a vehicle runs and which flows via each intake passage. Thus, the heated portions in a vehicle cabin are cooled down by utilizing the air which flows in such a way as to leak out of each intake passage. Consequently, according to the above-described structure, the air needed is taken into the inside of the vehicle without reducing the effects obtained when each movable fin is in the fully-closed state.

According to the above-described structure, the grille shutter apparatus of this disclosure restricts reduction of the effects obtained by setting the movable fin in the fully-closed state, and takes the necessary air into the inside of the vehicle body.

According to another aspect of this disclosure, the intake passage is set in a manner that the intake passage includes an upstream-side opening portion and a downstream-side opening portion which are respectively positioned at an upstream side and at a downstream side relative to each movable fin in the inflow direction of the air flowing from the grille opening portion, and the upstream-side opening portion and the downstream-side opening portion are restricted from overlapping with each other in the inflow direction of the air in a case where each movable fin is in the fully-closed state.

According to the above-described structure, it is restricted that the air flows linearly from the grille opening portion into the inside of the vehicle body via each intake passage. Thus, the flow rate of the air flowing via each intake passage into the inside of the vehicle body is set to be at an appropriate rate. As a result, the reduction in the effects is restricted, the reduction which might be caused by providing each intake passage.

According to this disclosure, the grille shutter apparatus further includes a restricting portion for restricting the closing operation of the movable fin and for providing a clearance serving as the intake passage at a fin end portion of the movable fin.

According to the above-described structure, the intake passage extending in the direction intersecting with the inflow direction of the air is provided with the easy and simple structure.

According to this disclosure, the restricting portion corresponds to a stopper for restricting the closing operation of the movable fin by being in contact with the movable fin.

According to the above-described structure, the intake passage extending in the direction intersecting with the inflow direction of the air is provided with the easy and simple structure.

According to another aspect of this disclosure, the movable fin is provided at plural positions and the plural movable fins are arranged in at least two rows that are parallelly adjacent to each other, and each movable fin performs the opening/closing operation by rotating and forms the intake passage between the movable fins of the adjacent rows in a state where each movable fin is in the fully-closed state.

According to the above-described structure where the plural movable fins are arranged in at least two rows that are parallelly adjacent to each other, the intake passage extending in the direction intersecting with the inflow direction of the air is established by setting or defining a rotational position of the plural movable fins which corresponds to the fully-closed state of the plural movable fins without modifying the structure to a great extent.

According to another aspect of this disclosure, each movable fin includes a rotary shaft which is offset in the inflow direction of the air relative to the movable fin of the adjacent row.

According to another aspect of this disclosure, each movable fin is formed in a manner that the fin end portion of each movable fin is positioned to be offset relative to the rotary shaft thereof in the inflow direction of the air in a case where each movable finis in the fully-closed state.

It is desirable that the air flows at an upper portion and a lower portion of each movable fin relative to the rotary shaft thereof in a balanced manner in order to keep the rotational position of each movable fin at the position corresponding to the fully-closed state thereof. According to the above-described structure, the intake passage is established between the movable fins of the adjacent rows. At the same time, each movable fin is arranged at a larger intersection angle relative to the inflow direction of the air. Thus, by allowing the air to flow at the upper portion and the lower portion of each movable fin relative to the rotary shaft thereof in the balanced manner, necessary air is taken into the inside of the vehicle body via each intake passage, and at the same time the rotational position of each movable fin which corresponds to the fully-closed state thereof is stably maintained.

According to another aspect of this disclosure, the intake passage is constituted by a through hole provided at the movable fin.

According to the above-described structure, the air may be taken into the inside of the vehicle body via each through hole even when each movable fin is in the fully-closed state. The flow rate of the air that may be taken in is controllable freely by the number of the through holes, a shape of an opening of each through hole, an inner diameter of each through hole and/or a position at which each through hole is formed. Consequently, by setting the above-mentioned factors appropriately, the air needed is taken into the inside of the vehicle body without reducing the effects obtained when each movable fin is in the fully-closed state.

According to another aspect of this disclosure, the through hole provides an intake passage extending in a direction intersecting with an inflow direction of the air flowing from the grille opening portion in a case where the movable fin is in the fully-closed state.

According to the above-described structure, the air flow which is created as the vehicle runs and which flows via each through hole may be restricted efficiently. Thus, the flow rate of the air flowing via each through hole into the inside of the vehicle body is set to be at an appropriate rate. As a result, reduction in the effects is restricted, the reduction which might be caused by providing each through hole.

According to another aspect of this disclosure, the through hole is set in a manner that the through hole includes an upstream-side opening portion and a downstream-side opening portion which are respectively positioned at an upstream side and at a downstream side relative to the movable fin in an inflow direction of the air flowing from the grille opening portion in a case where the movable fin is in the fully-closed state, and the upstream-side opening portion and the downstream-side opening portion are restricted from overlapping with each other in the inflow direction of the air in a case where the movable fin is in the fully-closed state.

According to the above-described structure, the inside of the vehicle body is not seen via each through hole when seen from the direction identical to the inflow direction of the air (that is, from the upstream side). Thus, it is restricted that the air flows linearly from the grille opening portion into the inside of the vehicle body via each through hole. Consequently, the flow rate of the air flowing via each through hole into the inside of the vehicle body is set to be at the appropriate rate. As a result, the reduction in the effects is restricted, the reduction which might be caused by providing each through hole.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a side view schematically illustrating a configuration of a vehicle on which a grille shutter apparatus of first and second embodiments disclosed here is mounted;
Fig. 2 is a perspective view of the grille shutter apparatus of the first embodiment;
Fig. 3 is a cross-sectional view taken along line III-III of Fig. 2;
Fig. 4 is a perspective view of the grille shutter apparatus of the second embodiment disclosed here;
Fig. 5 is a cross-sectional view taken along line V-V of Fig. 4;
Fig. 6A is a cross-sectional view schematically illustrating a configuration of another example of the movable fin; and
Fig. 6B is a cross-sectional view schematically illustrating a configuration of another example of the movable fin.

### DETAILED DESCRIPTION

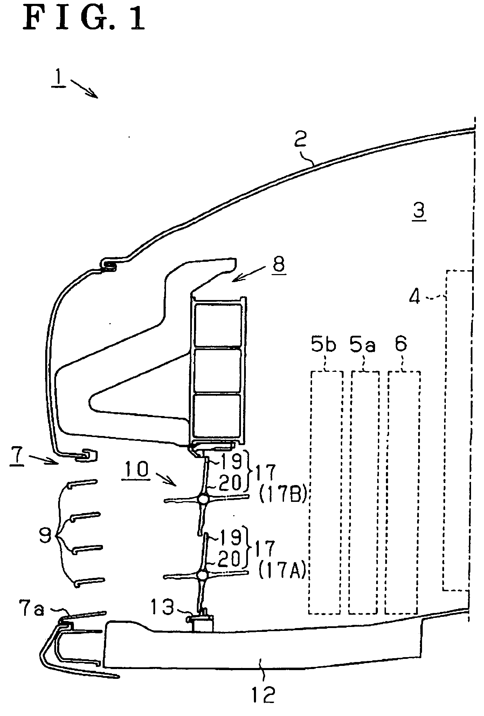

A first embodiment of this disclosure will be explained hereunder with reference to the drawings. As illustrated in Fig. 1, at a vehicle 1, an engine room 3 is provided in an inside of a vehicle body 2. A radiator 5a used for cooling an engine 4, and a condenser 5b used for air conditioning are accommodated in the engine room 3. At a front portion (that is, at a portion on the left side in Fig. 1) of the vehicle body 2, a grille opening portion 7 is provided so that an outside of the vehicle 1 in a front direction thereof and the inside of the vehicle body 2 are in communication with each other. The radiator 5a and the condenser 5b are arranged forward relative to the engine 4 such that the radiator 5a and the condenser 5b receive air that flows into the engine room 3 from the grille opening portion 7.

A fan 6 is provided rearward relative to the radiator 5a and to the condenser 5b (that is, on the right side in Fig. 1). As the fan 6 rotates, the air efficiently flows to the radiator 5a and the condenser 5b.

In the grille shutter apparatus 10 according to the first embodiment, the grille opening portion 7 is formed downward relative to a bumper 8. At an opening end 7a of the grille opening portion 7, a grille panel 9 providing a design surface, (that is, a lower grill) is attached. The grille shutter apparatus 10 of the first embodiment is configured to control a flow rate of the air flowing from the grille opening portion 7 into an inside of the engine room 3 and is configured to be mounted on the vehicle 1.

In further detail, the grille shutter apparatus 10 includes a frame 13 having a frame-like shape and fixed to a structural body 12 provided at the vehicle body 2 such that the frame 13 defines a flow path of the air flowing from the grille opening portion 7. The grille shutter apparatus 10 includes plural movable fins 17 arranged within a framework of the frame 13 such that the movable fins 17 are aligned with each other. For example, the movable fins 17 are arranged in at least two rows and the rows are adjacent to each other in a substantially parallel manner.

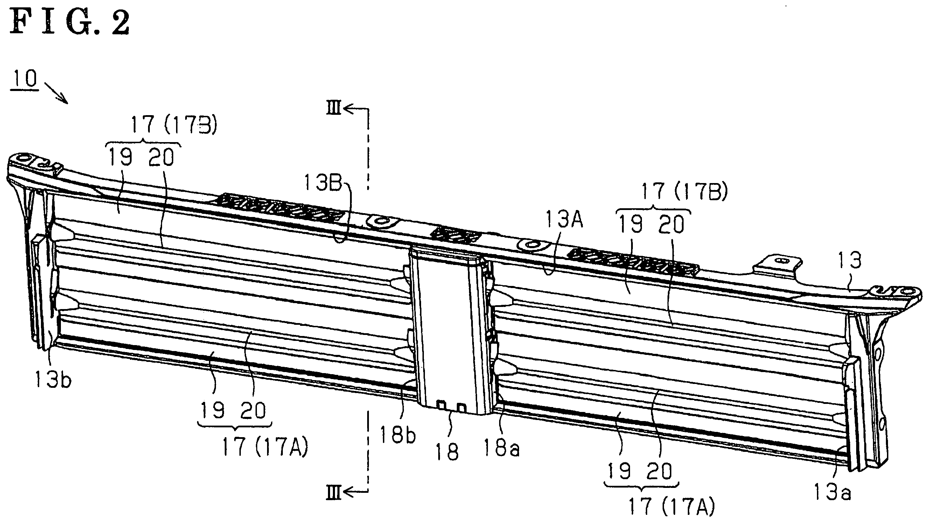

As illustrated in Fig. 2, the frame 13 includes a laterally long shape and extends in a width direction of the vehicle body 2 so that the shape of the frame 13 conforms to a shape of the grille opening portion 7 opening at the front portion of the vehicle body 2. An actuator portion 18 including an outline of a substantially columnar shape is provided at a substantially central portion within the framework of the frame 13 in the width direction. The frame 13 is divided by the actuator portion 18 into an opening portion 13A and an opening portion 13B which are arranged on the left and right sides, respectively. Inside each of the opening portions 13A and 13B, the movable fins 17 are arranged in two rows that are arranged substantially parallel to each other.

Specifically, each movable fin 17 includes a fin portion 19 formed in a substantially long flat plate shape extending in a width direction of the frame 13. Each movable fin 17 includes a rotary shaft 20 spanned between a corresponding portion of a side surface 18a of the actuator portion 18 and an inner side surface 13a of the frame 13 which faces the side surface 18a, and between a corresponding portion of a side surface 18b of the actuator portion 18 and an inner side surface 13b of the frame 13 which faces the side surface 18b. The actuator portion 18 is configured to drive each rotary shaft 20, and thereby causing each movable fin 17 to rotate.

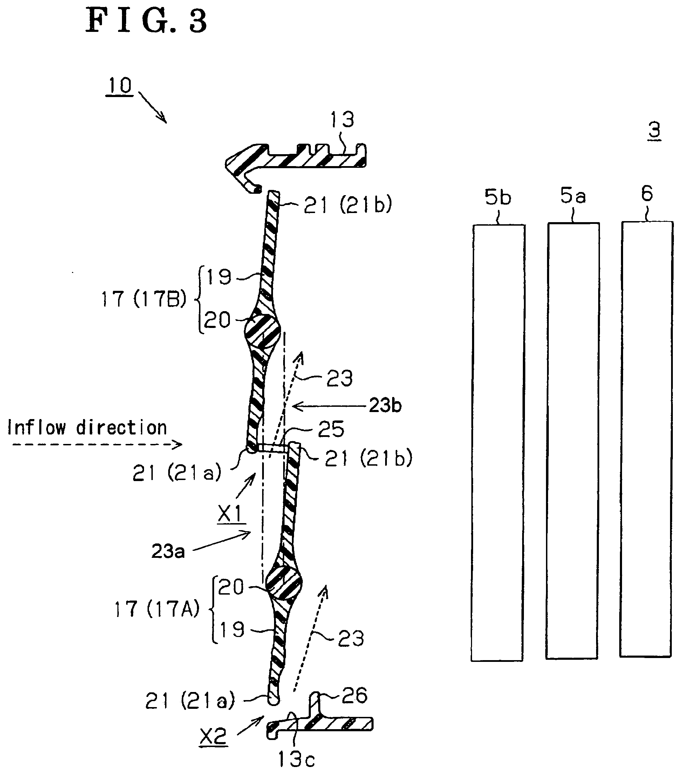

As illustrated Figs. 1 and 3, each movable fin 17 rotates about the rotary shaft 20 in a manner that an end (a fin end portion 21) of the fin portion 19 of each movable fin 17 creates an arc-shaped trajectory or path. In a case where each movable fin 17 rotates in one direction (that is, in the clockwise direction in the relevant drawings) so that the fin portion 19 is oriented parallel to an inflow direction of the air flowing from the grille opening portion 7, each movable fin 17 is brought in an open state. In a case where each movable fin 17 rotates in the other direction (that is, in the counter clockwise direction in the relevant drawings) so that the fin portion 19 intersects with the inflow direction of the air flowing from the grille opening portion 7, each movable fin 17 is brought in a closed state.

According to the grille shutter apparatus 10 of the first embodiment, the above-described movement of each movable fin 17 is controlled by the actuator portion 18. The grille shutter apparatus 10 is configured such that the flow rate of the air flowing from the grille opening portion 7 into the inside of the engine room 3 is controlled in accordance with the opening/closing operation performed by each movable fin 17 as each movable fin 17 rotates.

As illustrated in Fig. 3, the grille shutter apparatus 10 is configured such that, in a case where each movable fin 17 is in a fully-closed state, each movable fin 17 forms an intake passage 23 allowing communication between an upstream side (the left side in Fig. 3) and a downstream side (the right side in Fig. 3) relative to each movable fin 17. The grille shutter apparatus 10 allows the air to be taken into the inside of the engine room 3 via the intake passages 23 even when each movable fin 17 is in the fully-closed state. The intake passage 23 includes an upstream-side opening portion 23a and a downstream-side opening portion 23b which are positioned at the upstream side and at the downstream side, respectively, relative to each movable fin 17 in the inflow direction of the air flowing into the engine room 3 from the grille opening portion 7.

In further detail, within the frame 13 (that is, inside each of the opening portions 13A and 13B, refer to Fig. 2), each movable fin 17 is arranged in a manner that the fin end portions 21 of the movable fins 17 of adjacent rows in an up/down direction are positioned to overlap with each other in the inflow direction of the air in a case where each movable fin 17 rotates in a close direction. A stopper 25 is provided at the fin end portion 21 of a movable fin 17A (the movable fin 17) arranged at a lower side. The stopper 25 is configured to be in contact with the fin end portion 21 of a movable fin 17B (the movable fin 17) arranged at an upper side relative to the movable fin 17A in accordance with the rotational movement of each movable fin 17 in the close direction.

Specifically, each stopper 25 is provided at an upper-side fin end 21 b (the fin end 21 which is positioned at, for example, the upper-side in this embodiment) of each movable fin 17A. That is, in a case where each movable fin 17 rotates in the close direction, a lower-side fin end 21 a (the fin end 21 which is positioned at, for example, the lower-side side in this embodiment) of each movable fin 17 moves in a direction (that is, the direction from the left side toward the right side in Fig. 3) which conforms to the inflow direction of the air, and the upper-side fin end 21b of each movable fin 17 moves in an opposite direction (that is, the direction from the right side toward the left side in Fig. 3) which is opposite to the inflow direction of the air. Thus, as a result of the rotational movement of each movable fin 17 in the close direction, each stopper 25 provided at the upper-side fin end 21 b of each movable fin 17A comes in contact with the lower-side fin end 21 a of the corresponding movable fin 17B. According to this embodiment, a position at which each movable fin 17 is restricted by each stopper 25 from performing the closing operation is referred to as a rotational position corresponding to the fully-closed state of each movable fin 17.

More specifically, an outer shape of each stopper 25 is formed in a protruding configuration protruding in a direction that is substantially orthogonal to the upper-side fin end 21 b of each movable fin 17A. In a case where each stopper 25 comes in contact with the lower-side fin end 21 a of the corresponding movable fin 17B, a clearance X1 serving as the intake passage 23 is established between the fin end portions 21 of the movable fins 17A and 17B of the adjacent rows in the up/down direction.

In a state where each movable fin 17 is in the fully-closed state, the fin portion 19 of each movable fin 17 is arranged to intersect with the inflow direction of the air flowing from the grille opening portion 7. Thus, by setting the clearance X1 between the fin end portion 21 of each movable fin 17A and the fin end portion 21 of the corresponding movable fin 17B as stated above, the intake passage 23 intersecting with the inflow direction of the air is formed between each movable fin 17A and the corresponding movable fin 17B which are in the adjacent rows in the up/down direction.

The rotary shaft 20 of each movable fin 17A arranged at the lower side is arranged on the downstream side of the inflow direction of the air (that is, on the right side in Fig. 3) relative to the rotary shaft 20 of each movable fin 17B arranged at the upper side. In other words, according to this embodiment, each movable fin 17 (17A, 17B) includes the rotary shaft 20 that is offset in the inflow direction of the air relative to the movable fin 17 of the adjacent row. Thus, in the fully-closed state, the intake passage 23 is established between the movable fins 17A and 17B of the adjacent rows in the up/down direction. At the same time, the grille shutter apparatus 10 of this embodiment is configured so that each fin portion 19 is arranged at a larger intersection angle relative to the inflow direction of the air compared to a case where the rotary shaft 20 is not offset in the inflow direction of the air relative to the movable fin 17 of the adjacent row. That is, the intersection angle formed by the inflow direction of the air and each fin portion 19 may be set closer to the right angle.

In a case where each movable fin 17 is in the fully-closed state, a clearance X2 is established between the lower-side fin end 21 a of each movable fin 17A arranged at the lower side and an inner side surface 13c of the frame 13. A protruding portion 26 is provided at the inner side surface 13c of the frame 13, so as to be positioned rearward relative to each movable fin 17A, that is, on the downstream side of the inflow direction of the air (on the right side in Fig. 3). Each protruding portion 26 extends in a direction that is substantially parallel to each movable fin 17A when the movable fin 17A is in the fully-closed state. The intake passage 23, which extends in a direction intersecting with the inflow direction of the air, is established between each protruding portion 26 and the lower-side fin end 21a of each corresponding movable fin 17A.

In addition, the intake passage 23 is set in a manner that the intake passage 23 includes the upstream-side opening portion 23a and the downstream-side opening portion 23b which are respectively positioned at the upstream side (that is, on the left side in Fig. 3) and at the downstream side (that is, on the right side in Fig. 3) relative to each movable fin 17 in the inflow direction of the air flowing from the grille opening portion 7, and the upstream-side opening portion 23a and the downstream-side opening portion 23b are restricted from overlapping with each other in the inflow direction of the air in a case where each movable fin 17 is in the fully-closed state. In other words, each intake passage 23 is set such that the inside of the engine room 3 is not seen via each intake passage 23 when seen from a direction identical to the inflow direction of the air (that is, from the upstream side).

According to the first embodiment, the fan 6 provided in the inside the engine room 3 rotates when the engine 4 needs to be intensively cooled down (refer to Fig. 1). In a state where each movable fin 17 is in the fully-closed state, the rotation of the fan 6 forcibly creates an air flow via each intake passage 23, and thus the air needed for cooling may be taken from the grille opening portion 7 into the inside of the engine room 3.

According to the first embodiment described above, the following effects and advantages are attained. (1) The grille shutter apparatus 10 is configured so that, when each movable fin 17 is in the fully-closed state, the each movable fin 17 establishes the intake passage 23 intersecting with the inflow direction of the air flowing from the grille opening portion 7.

The above-described structure allows the air to be taken into the inside of the engine room 3 via each intake passage 23 even in the fully-closed state. As a result, heated portions of, for example, the engine, that need to be cooled are efficiently cooled down even in a case where each movable fin 17 is locked in the fully-closed state due to, for example, a system failure.

However, improvement in an aerodynamic performance, which is obtained when each movable fin 17 is in the fully-closed state, is generated in a case where the air blocked by each movable fin 17 remains at the upstream side relative to each movable fin 17 and thus internal pressure at an inside of the grille opening portion 7 rises, and therefore fresh air is restricted from flowing in. Consequently, it is desirable that the air flow via each intake passage into the engine room 3 is restricted in a case where there is no need to positively take in the air into the engine room 3.

In this regard, according to this embodiment, most of the air flowing from the grille opening portion 7 is utilized for improving the aerodynamic performance because, as described above, each intake passage 23 extends in the direction intersecting with the inflow direction of the air, thereby restricting the air flow which is created as the vehicle 1 runs and which flows via each intake passage 23. Thus, the heated portions in the inside of the engine room 3 are cooled down by utilizing the air which flows in from each intake passage 23 in such a way as to leak out of each intake passage 23. In a case where the air needs to be taken into the engine room 3 more actively, the air flow via each intake passage 23 may be forcibly created by using the fan 6 provided in the inside of the engine room 3. Consequently, according to the above-described structure, the air needed is taken into the engine room 3 without reducing the effects obtained when each movable fin 17 is in the fully-closed state.

(2) Each intake passage 23 is set in a manner that each intake passage 23 includes the upstream-side opening portion 23a and the downstream-side opening portion 23b which are respectively positioned at the upstream side and at the downstream side relative to each movable fin 17 in the inflow direction of the air flowing from the grille opening portion 7, and the upstream-side opening portion 23a and the downstream-side opening portion 23b do not overlap with each other when seen in the inflow direction of the air in a case where each movable fin 17 is in the fully-closed state. According to the above-described structure, it is restricted that the air flows linearly from the grille opening portion 7 into the inside of the engine room 3 via each intake passage 23. Thus, the flow rate of the air flowing via each intake passage 23 into the inside of the engine room 3 is set to be at an appropriate rate. As a result, reduction in the effects is restricted, the reduction which might be caused by providing each intake passage 23.

(3) As each movable fin 17 is restricted from performing the closing operation, that is, restricted from rotating in the close direction, the fin end portion 21 of each movable fin 17 defines the clearances X1 and X2 each serving as the intake passage 23. The position at which each movable fin 17 is restricted from rotating in the close direction is referred to as the rotational position corresponding to the fully-closed state of each movable fin 17.

Specifically, the fin portion 19 (the fin end 21) of each movable fin 17 which is in the fully-closed state intersects with the inflow direction of the air flowing from the grille opening portion 7. Thus, according to the above-described structure, the intake passage 23 extending in the direction intersecting with the inflow direction of the air is provided with an easy and simple structure.

(4) Each movable fin 17 is arranged in a manner that, as each movable fin 17 rotates in the close direction, the fin end portions 21 of the movable fins 17 of the adjacent rows in the up/down direction are positioned to overlap with each other in the inflow direction of the air. The stopper 25 which is provided at the fin end portion 21 of each movable fin 17A arranged at the lower side relative to the movable fin 17B is brought in contact with the fin end portion 21 of the movable fin 17B arranged at the upper side relative to the movable fin 17A in accordance with the rotational movement of each movable fin 17 in the close direction.

According to the above-described structure, the closing operation of each movable fin 17 is securely restricted with a simple structure. In addition, the clearance X1 serving as the intake passage 23 is established between the fin end portions 21 facing with each other via the stopper 25.

(5) Each movable fin 17 (17A, 17B) includes the rotary shaft 20 that is offset in the inflow direction of the air relative to the movable fin 17 of the adjacent row. In order to keep the rotational position of each movable fin 17 at the position corresponding to the fully-closed state, it is desirable that the air, that is, the air flow, flows at an upper portion and a lower portion of each movable fin 17 relative to the rotary shaft 20 thereof in a balanced manner. According to the above-described structure, the intake passage 23 is established between the movable fins 17A and 17B of the adjacent rows in the up/down direction. At the same time, each fin portion 19 may be arranged at the larger intersection angle relative to the inflow direction of the air. Accordingly, the air flows at the upper portion and the lower portion of each movable fin 17 relative to the rotary shaft 20 thereof in the balanced manner. As a result, the necessary air is taken into the engine room 3 via each intake passage 23, and at the same time the rotational position of each movable fin 17 which corresponds to the fully-closed state of each movable fin 17 is stably maintained.

A second embodiment of this disclosure will be explained hereunder with reference to the drawings. In the second embodiment, the same reference numerals as in the first embodiment designate the same or corresponding structures, and therefore, description of these structures is omitted.

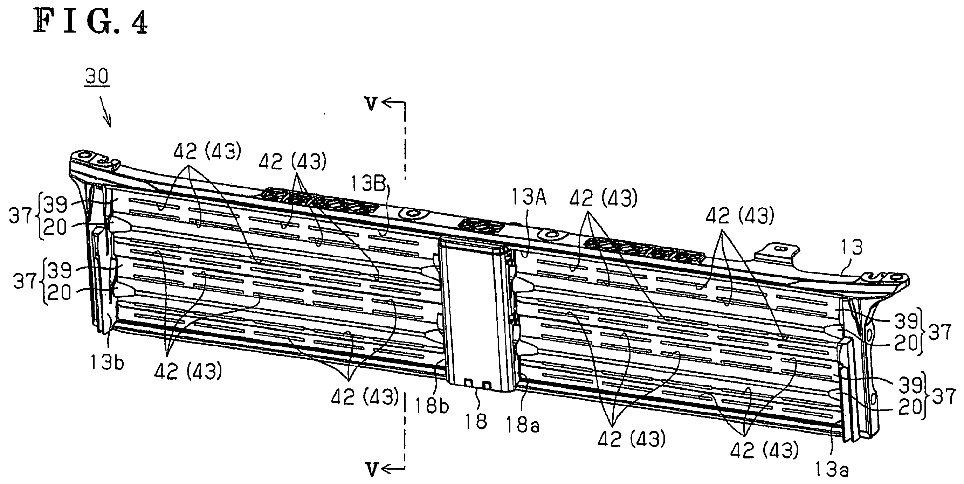

As illustrated in Fig. 4, in a manner similar to the grille shutter apparatus 10 of the first embodiment, a grille shutter apparatus 30 of the second embodiment includes plural movable fins 37 arranged within the framework of the frame 13 such that the movable fins 37 are aligned with each other.

Specifically, according to the grille shutter apparatus 30 of the second embodiment, inside each of the opening portions 13A and 13B that are provided within the framework of the frame 13, the movable fins 37 are aligned in the two rows that are arranged parallel to each other. The grille shutter apparatus 30 is configured such that the flow rate of the air flowing from the grille opening portion 7 into the inside of the engine room 3 is controlled in accordance with an opening/closing operation performed by each movable fin 37 as each movable fin 37 rotates.

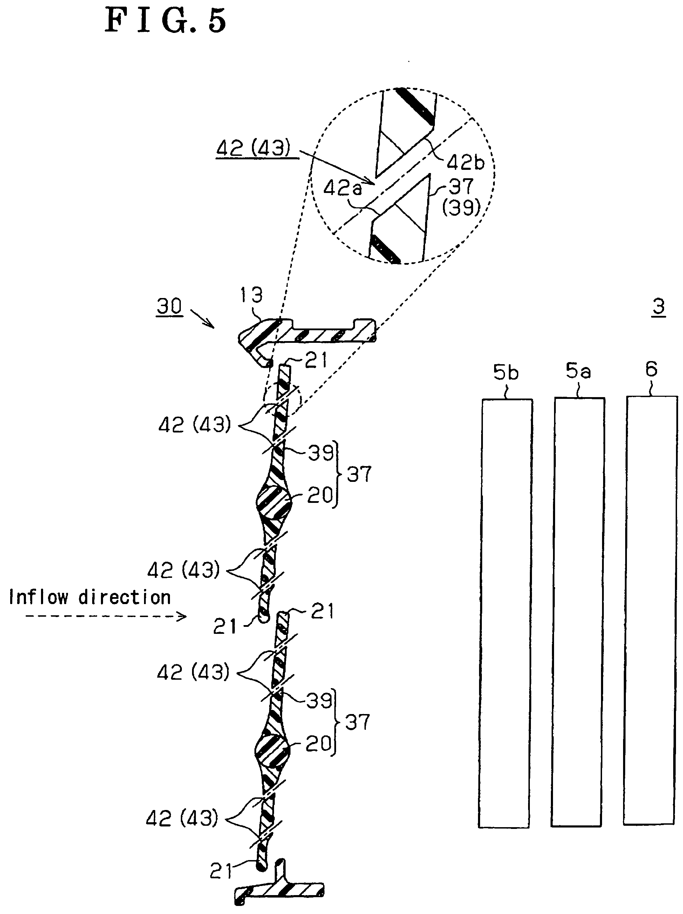

As illustrated in Fig. 5, each movable fin 37 of the second embodiment is different from each movable fin 17 of the first embodiment (refer to Fig. 3) in that the rotary shafts 20 of the movable fins 37 are not offset relative to each other. The grille shutter apparatus 30 is configured so that the fin end portions 21 of the movable fins 37 of the adjacent rows overlap with each other in a state where each movable fin 37 is in the fully-closed state, and thus the air flowing from the grille opening portion 7 is efficiently blocked.

As illustrated in Figs. 4 and 5, each movable fin 37 includes a through hole 42 provided at plural positions so as to penetrate a fin portion 39 of each movable fin 37 in a thickness direction thereof. In a state where each movable fin 37 is in the fully-closed state, each through hole 42 establishes an intake passage 43 which allows the communication between the upstream side (the left side in Fig. 5) and the downstream side (the right side in Fig. 5) relative to each movable fin 37, and thus the grille shutter apparatus 30 allows the air to be taken into the inside of the engine room 3 even when each movable fin 37 is in the fully-closed state.

In further detail, as illustrated in Fig. 4, each through hole 42 includes an opening formed in a long hole shape extending in a lengthwise direction of the fin portion 39. According to this embodiment, each movable fin 37 is provided with twenty of the through holes 42. Specifically, five of the through holes 42 are substantially evenly-spaced and aligned in a row in the lengthwise direction of the fin portion 39 so as to form one group. Four of the above-described rows (that is, four groups) are aligned to one another.

As illustrated in Fig. 5, each through hole 42 includes an upstream-side opening portion 42a and a downstream-side opening portion 42b which are positioned at the upstream side and at the downstream side relative to the movable fin 37 in the inflow direction of the air flowing from the grille opening portion 7. That is, the intake passage 43 includes the upstream-side opening portion 42a and the downstream-side opening portion 42b. Each through hole 42 is formed to diagonally penetrate the fin portion 39 so that the downstream-side opening portion 42b is positioned upward (that is, on the upper side in Fig. 5) relative to the upstream-side opening portion 42a when each movable fin 37 is at the rotational position corresponding to the fully-closed state of each movable fin 37. Thus, according to this embodiment, each through hole 42 is configured to establish the intake passage 43 extending in the direction intersecting with the inflow direction of the air flowing from the grille opening portion 7.

Each through hole 42 is set in a manner that the through hole 42 includes the upstream-side opening portion 42a and the downstream-side opening portion 42b which are respectively positioned at the upstream side and at the downstream side relative to the movable fin 37 in the inflow direction of the air flowing from the grille opening portion 7 in a case where the movable fin 37 is in the fully-closed state, and the upstream-side opening portion 42a and the downstream-side opening portion 42b are restricted from overlapping with each other in the inflow direction of the air in a case where each movable fin 37 is in the fully-closed state. In other words, each through hole 42 is configured so that the inside of the engine room 3 is not seen via each through hole 42 when seen from the direction identical to the inflow direction of the air (that is, from the upstream side). Thus, the grille shutter apparatus 30 according to the second embodiment is configured such that the air is restricted from flowing linearly from the grille opening portion 7 into the inside of the engine room 3 via each intake passage 43.

By using the grille shutter apparatus 30 of the second embodiment, advantages likewise obtained by the grille shutter apparatus 10 of the first embodiment are attained. Specifically, the air may be taken into the inside of the engine room 3 via each intake passage 43 formed by the through hole 42 even when each movable fin 37 is in the fully-closed state. In addition, each intake passage 43 extends in the direction intersecting with the inflow direction of the air, and thus the air flow which is created as the vehicle 1 runs and which flows via each intake passage 43 is restricted. Further, each through hole 42 includes the upstream-side opening portion 42a and the downstream-side opening portion 42b which are respectively positioned at the upstream side and at the downstream side relative to the movable fin 37 in the inflow direction of the air in a case where the movable fin 37 is in the fully-closed state, and the upstream-side opening portion 42a and the downstream-side opening portion 42b do not overlap with each other in the inflow direction of the air in a case where each movable fin 37 is in the fully-closed state. Thus, the flow rate of the air flowing via each through hole 42 (the intake passage 43) into the inside of the engine room 3 is set to be at an even more appropriate rate. As a result, the necessary air is taken into the inside of the engine room 3, and at the same time the effects obtained when each movable fin 37 is in the fully-closed state is restricted from being reduced.

The first and second embodiments are not limited thereto and may be modified as follows. According the first and second embodiments, the air flowing from the grille opening portion 7 is taken into the inside of the engine room 3 provided in the inside of the vehicle body 2. However, the air flowing from the grille opening portion 7 may be taken into a portion inside the vehicle body 2 other than the engine room 3 as long as the portion is in the inside the vehicle body 2 and the flow rate of the air flowing thereto is controllable in accordance with the opening/closing operation of each movable fin 17, 37. That is, the air may be taken into space or room into which the air flowing from the grille opening portion 7 is introduced, including, for example, an accommodation room for a heat exchanger such as the radiator 5a or the condenser 5b. Thus, the first and second embodiments may be applied to a vehicle where the engine is not mounted on an interior space positioned forward relative to a vehicle cabin (that is, for example, a vehicle where the engine is mounted on a rear portion or a central portion of the vehicle body, or an electric vehicle).

According to the first embodiment, each movable fin 17 (17A, 17B) includes the rotary shaft 20 that is offset in the inflow direction of the air relative to the movable fin 17 of the adjacent row. However, each movable fin 17 may be designed so that the fin end portion 21 of each movable in 17 is positioned offset in the inflow direction of the air relative to the rotary shaft 20 thereof when each movable fin 17 is in the rotational position corresponding to the fully-closed state.

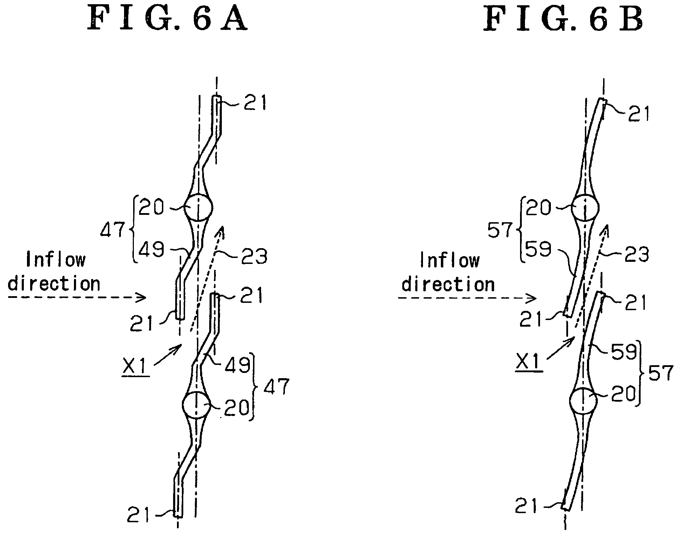

For example, as illustrated in Fig. 6A, a movable fin 47 includes a fin portion 49 bent in a cranked shape when seen from an axial direction of the rotary shaft 20. As illustrated in Fig. 6B, a movable fin 57 includes a fin portion 59 formed to be curved when seen in the axial direction of the rotary shaft 20. By using the movable fin 47, 57 having the above-described configurations, the intake passage 23 is established between the movable fins 47, 57 of the adjacent rows in the up/down direction, and at the same time each fin portion 49, 59 is arranged at the larger intersection angle relative to the inflow direction of the air in a manner similar to a case where the rotary shafts 20 are offset. In addition, the structure where the fin end portion 21 is offset relative to the rotary shaft 20 by using the movable fin 47, 57 including the aforementioned shape, and the structure where the rotary shafts 20 are offset as is described in the first embodiment, may be combined with each other. Accordingly, flexibility or freedom of design is enhanced. The frame 13 and each movable fin 17, 37, 47, 57 are made of, for example, resin.

According to each embodiment described above, the grille shutter apparatus 10, 30 is provided with plural movable fins 17, 37 performing the opening/closing operation by rotating. However, the movable fin may perform the opening/closing operation by, for example, sliding, pivoting or oscillating, or in other manners.

According to each embodiment described above, the movable fins 17, 37 are arranged in the two rows that are arranged parallel to each other inside each of the opening portions 13A and 13B which are defined by the actuator portion 18 that divides the frame 13. However, the number of movable fins is not limited thereto. For example, the movable fins arranged in three or more rows may be provided. Alternatively, a structure where the movable fins are arranged in one row may be used as long as the structure allows the intake passage extending in the direction intersecting with the inflow direction of the air to be provided. This structure may be applied to the grille shutter apparatus where the flow rate of the air is controlled by the opening/closing operation of one movable fin.

Arrangement of the actuator portion 18 and/or alignment of the movable fins may be appropriately changed. For example, the actuator portion may be arranged at an end portion of the frame 13 in the width direction thereof. Alternatively, for example, each movable fin may include the rotary shaft spanned in the up/down direction so that each movable fin is laid out substantially vertically.

According to the first embodiment, the intake passage 23 is set in a manner that the intake passage 23 includes the upstream-side opening portion 23a and the downstream-side opening portion 23b which are respectively positioned at the upstream side and at the downstream side relative to each movable fin 17 in the inflow direction of the air flowing from the grille opening portion 7, and the upstream-side opening portion 23a and the downstream-side opening portion 23b are restricted from overlapping with each other in the inflow direction of the air in a case where each movable fin 17 is in the fully-closed state. However, each intake passage 23 may be provided such that the upstream-side opening portion 23a and the downstream-side opening portion 23b slightly overlap with each other. In other words, each intake passage 23 may be configured so that the inside of the engine room 3 is seen via each intake passage 23 when seen from the direction identical to the inflow direction of the air (that is, from the upstream side) as long as the flow rate of the air taken in the engine room 3 may be set to be at the appropriate rate by restricting the air flow which is created as the vehicle 1 runs and which flows via each intake passage 23.

According to the second embodiment, each through hole 42 is set in a manner that the through hole 42 includes the upstream-side opening portion 42a and the downstream-side opening portion 42b which are respectively positioned at the upstream side and at the downstream side relative to the movable fin 37 in the inflow direction of the air flowing from the grille opening portion 7 in a case where the movable fin 37 is in the fully-closed state, and the upstream-side opening portion 42a and the downstream-side opening portion 42b are restricted from overlapping with each other in the inflow direction of the air in a case where each movable fin 37 is in the fully-closed state. However, each intake passage 42 may be configured so that the inside of the engine room 3 is seen via each intake passage 42 when seen from the direction identical to the inflow direction of the air (that is, from the upstream side).

The direction in which each through hole extends does not necessarily intersect with the inflow direction of the air. In addition, for example, the number of the through holes, the shape of the opening of each through hole, an inner diameter of each through hole, a position at which each through hole is formed, and/or other factors may be appropriately changed. By providing the through hole or through holes at each movable fin, the air may be taken in via each through hole even in a case where each movable fin is in the fully-closed state. The flow rate of the air that may be taken in is controllable freely by the number of the through holes, the shape of the opening of each through hole, the inner diameter of each through hole and/or the position at which each through hole is formed. Consequently, by setting the above-mentioned factors appropriately, the air needed is taken into the inside of the engine room 3 without reducing the effects obtained when each movable fin is in the fully-closed state.

According to the first embodiment, the stopper 25 is provided at the upper-side fin end 21b of each movable stopper 17A arranged at the lower side. The stopper 25 serving as a restricting portion comes in contact with the lower-side fin end 21a of the corresponding movable fin 17B arranged at the upper-side, and thus the closing operation of each movable fin 17, that is, the rotational movement of each movable fin 17 in the close direction is restricted. However, a configuration of the restricting portion is not limited thereto as long as the restricting portion restricts the closing operation of each movable fin and allows the clearance serving as the intake passage to be provided at the fin end of the movable fin. For example, the stopper may be provided at the lower-side fin end 21a of each movable fin 17B arranged at the upper-side. Alternatively, for example, the restricting portion may be configured so that the stopper provided at the frame 13 is in contact with any of the movable fins 17 and restricts the closing operation of the movable fin 17. Alternatively, the grille shutter apparatus may be configured such that the closing operation of each movable fin 17 may be forcibly restricted through an operation of the actuator portion 18.

According to the first embodiment, the clearance X2 serving as the intake passage 23 is established also between the lower-side fin end 21a of each movable fin 17A arranged at the lower-side and the inner side surface 13c of the frame 13 when each movable fin 17 is in the fully-closed state. However, the configuration is not limited thereto and may include the clearance X1 serving as the intake passage 23 established only between the fin end portions 21 of the movable fins 17A and 17B of the adjacent rows.

## Claims

1. A grille shutter apparatus (10, 30) adapted to be arranged at a grille opening portion (7) of a front portion of a vehicle body (2), comprising:
a movable fin (17, 37, 47, 57) for controlling a flow rate of air flowing from the grille opening portion (7) into an inside of the vehicle body (2) by performing an opening/closing operation; wherein
the movable fin (17, 37, 47, 57) is configured to form an intake passage (23, 43) extending in a direction intersecting with an inflow direction of the air flowing from the grille opening portion (7) in a case where the movable fin (17, 37, 47, 57) is in a fully-closed state,
**characterized in that** the grille shutter apparatus (10, 30) further comprises:
a stopper (25) for restricting the closing operation of the movable fin (17) by being in contact with the movable fin (17), wherein
the stopper (25) is formed in a protruding configuration protruding in a direction that is substantially orthogonal to a fin end portion (21) of the movable fin (17) and for providing a clearance (X1, X2) serving as the intake passage (23) at a fin end portion (21) of the movable fin (17).

2. The grille shutter apparatus (10, 30) according to claim 1, wherein
the intake passage (23, 43) is set in a manner that the intake passage (23, 43) includes an upstream-side opening portion (23a, 42a) and a downstream-side opening portion (23b, 42b) which are respectively positioned at an upstream side and at a downstream side relative to each movable fin (17, 37) in the inflow direction of the air flowing from the grille opening portion (7), and
the upstream-side opening portion (23a, 42a) and the downstream-side opening portion (23b, 42b) are restricted from overlapping with each other in the inflow direction of the air in a case where each movable fin (17, 37) is in the fully-closed state.

3. The grille shutter apparatus (10) according to claim 1 or 2, wherein
the movable fin (17,47, 57) is provided at a plurality of positions and the plurality of movable fins (17, 47, 57) are arranged in at least two rows that are parallelly adjacent to each other, and
each movable fin (17, 47, 57) performs the opening/closing operation by rotating and forms the intake passage (23) between the movable fins (17, 47, 57) of the adjacent rows in a state where each movable fin (17,47, 57) is in the fully-closed state.

4. The grille shutter apparatus (10) according to claim 3, wherein each movable fin (17) includes a rotary shaft (20) which is offset in the inflow direction of the air relative to the movable fin (17) of the adjacent row.

5. The grille shutter apparatus (10) according to claim 3 or 4, wherein each movable fin (47, 57) is formed in a manner that the fin end portion (21) of each movable fin (47, 57) is positioned to be offset relative to the rotary shaft (20) thereof in the inflow direction of the air in a case where each movable fin (47, 57) is in the fully-closed state.

6. The grille shutter apparatus (30) according to any one of claims 1 or 2, wherein the intake passage (43) is constituted by a through hole (42) provided at the movable fin (37).

7. The grille shutter apparatus (30) according to claim 6, wherein the through hole (42) provides an intake passage (43) extending in a direction intersecting with an inflow direction of the air flowing from the grille opening portion (7) in a case where the movable fin (37) is in the fully-closed state.

8. The grille shutter apparatus (30) according to claim 6 or 7, wherein
the through hole (42) is set in a manner that the through hole (42) includes an upstream-side opening portion (42a) and a downstream-side opening portion (42b) which are respectively positioned at an upstream side and at a downstream side relative to the movable fin (37) in an inflow direction of the air flowing from the grille opening portion (7) in a case where the movable fin (37) is in the fully-closed state, and
the upstream-side opening portion (42a) and the downstream-side opening portion (42b) are restricted from overlapping with each other in the inflow direction of the air in a case where the movable fin (37) is in the fully-closed state.

## Patentansprüche

1. Gitterverschlussvorrichtung (10, 30), welche an einen Gitteröffnungsabschnitt (7) eines Frontabschnitts einer Fahrzeugkarosserie (2) angepasst ist, mit:
einer beweglichen Lamelle (17, 37, 47, 57), die durch Ausführen eines Öffnungs-/Schließvorgangs eine Fließrate von Luft steuert, die von dem Gitteröffnungsabschnitt (7) in ein Inneres der Fahrzeugkarosserie (2) strömt; wobei
die bewegliche Lamelle (17, 37, 47, 57) dazu konfiguriert ist eine Einlass-Passage (23, 43) auszubilden, welche sich in eine Richtung erstreckt, die sich mit einer Einströmrichtung der von dem Gitteröffnungsabschnitt (7) strömenden Luft in einem Fall kreuzt, in dem sich die bewegliche Lamelle (17, 37, 47, 57) in einem vollständig geschlossenen Zustand befindet,
**dadurch gekennzeichnet, dass** die Gitterverschlussvorrichtung (10, 30) ferner umfasst:
einen Stopper (25), welcher den Schließvorgang der beweglichen Lamelle (17) durch Kontakt mit der beweglichen Lamelle (17) begrenzt, wobei
der Stopper (25) in eine Richtung überstehend ausgebildet ist, die im Wesentlichen orthogonal zu einem Lamellenendabschnitt (21) der beweglichen Lamelle (17) ist und einen Freiraum (X1, X2) bereitstellt, welcher als die Einlass-Passage (23) an einem Lamellenendabschnitt (21) der beweglichen Lamelle (17) dient.

2. Gitterverschlussvorrichtung (10, 30) gemäß Anspruch 1, wobei
die Einlass-Passage (23, 43) in einer Weise festgelegt ist, dass die Einlass-Passage (23, 43) einen stromaufwärtsseitigen Öffnungsabschnitt (23a, 42a) und einen stromabwärtsseitigen Öffnungsabschnitt (23b, 42b) beinhaltet, welche entsprechend auf einer Stromaufwärtsseite und einer Stromabwärtsseite relativ zu jeder beweglichen Lamelle (17, 37) in der Einströmrichtung der von dem Gitteröffnungsabschnitt (7) strömenden Luft positioniert sind, und
der stromaufwärtsseitige Öffnungsabschnitt (23a, 42a) und der stromabwärtsseitige Öffnungsabschnitt (23b, 42b) darin begrenzt sind, einander in der Einströmrichtung der Luft in einem Fall zu überlappen, in dem sich jede bewegliche Lamelle (17, 37) in dem vollständig geschlossenen Zustand befindet.

3. Gitterverschlussvorrichtung (10) gemäß Anspruch 1 oder 2, wobei
die bewegliche Lamelle (17, 47, 57) an einer Vielzahl an Positionen vorgesehen ist und die Vielzahl an beweglichen Lamellen (17, 47, 57) in zumindest zwei Reihen angeordnet sind, welche parallel benachbart zueinander sind, und
jede bewegliche Lamelle (17, 47, 57) durch Rotieren einen Öffnungs-/Schließvorgang durchführt und eine Einlass-Passage (23) zwischen den beweglichen Lamellen (17, 47, 57) der benachbarten Reihen in einem Zustand ausbildet, in dem sich jede bewegliche Lamelle (17, 47, 57) in dem vollständig geschlossenen Zustand befindet.

4. Gitterverschlussvorrichtung (10) gemäß Anspruch 3, wobei jede bewegliche Lamelle (17) eine Drehwelle (20) beinhaltet, welche in der Einströmrichtung der Luft relativ zur beweglichen Lamelle (17) der benachbarten Reihe versetzt ist.

5. Gitterverschlussvorrichtung (10) gemäß Anspruch 3 oder 4, wobei jede bewegliche Lamelle (47, 57) in einer Weise ausgebildet ist, dass der Lamellenendabschnitt (21) jeder beweglichen Lamelle (47, 57) in der Einströmrichtung der Luft relativ zu deren Drehwelle (20) versetzt positioniert ist, in einem Fall, in dem sich jede bewegliche Lamelle (47, 57) in dem vollständig geschlossenen Zustand befindet.

6. Gitterverschlussvorrichtung (30) gemäß einem der Ansprüche 1 oder 2, wobei die Einlass-Passage (23) durch ein Durchgangsloch (42) ausgebildet ist, welches an der beweglichen Lamelle (37) vorgesehen ist.

7. Gitterverschlussvorrichtung (30) gemäß Anspruch 6, wobei das Durchgangsloch (42) eine Einlass-Passage (43) bereitstellt, welche sich in eine Richtung erstreckt, die sich mit einer Einströmrichtung der von dem Gitteröffnungsabschnitt (7) strömenden Luft kreuzt, in einem Fall, in dem sich die bewegliche Lamelle (37) in dem vollständig geschlossenen Zustand befindet.

8. Gitterverschlussvorrichtung (30) gemäß Anspruch 6 oder 7, wobei
das Durchgangsloch (42) in einer Weise festgelegt ist, dass das Durchgangsloch (42) einen stromaufwärtsseitigen Öffnungsabschnitt (42a) und einen stromabwärtsseitigen Öffnungsabschnitt (42b) beinhaltet, welche relativ zur beweglichen Lamelle (37) entsprechend auf einer Stromaufwärtsseite und einer Stromabwärtsseite in einer Einströmrichtung der von dem Gitteröffnungsabschnitt (7) strömenden Luft positioniert sind, in einem Fall, in dem sich die bewegliche Lamelle (37) in dem vollständig geschlossenen Zustand befindet, und
der stromaufwärtsseitige Öffnungsabschnitt (42a) und der stromabwärtsseitige Öffnungsabschnitt (42b) darin beschränkt sind, sich einander in der Einströmrichtung der Luft zu überlappen, in einem Fall, in dem sich die bewegliche Lamelle (37) in dem vollständig geschlossenen Zustand befindet.

## Revendications

1. Appareil de volet de calandre (10, 30) prévu pour être disposé au niveau d'une partie d'ouverture de calandre (7) d'une partie avant d'une carrosserie de véhicule (2), comportant :
une ailette mobile (17, 37, 47, 57) destinée à commander un débit d'air s'écoulant depuis la partie d'ouverture de calandre (7) dans un intérieur de la carrosserie de véhicule (2) en réalisant une opération d'ouverture/fermeture ; dans lequel
l'ailette mobile (17, 37, 47, 57) est configurée pour former un passage d'admission (23, 43) s'étendant dans une direction coupant une direction d'écoulement d'entrée de l'air s'écoulant depuis la partie d'ouverture de calandre (7) dans un cas où l'ailette mobile (17, 37, 47, 57) est dans un état complètement fermé,
**caractérisé en ce que** l'appareil de volet de calandre (10, 30) comporte en outre :
une butée (25) destinée à limiter l'opération de fermeture de l'ailette mobile (17) en étant en contact avec l'ailette mobile (17), dans lequel
la butée (25) est formée dans une configuration saillante qui dépasse dans une direction qui est sensiblement perpendiculaire à une partie d'extrémité d'ailette (21) de l'ailette mobile (17) et destinée à prévoir un jeu (X1, X2) servant de passage d'admission (23) au niveau d'une partie d'extrémité d'ailette (21) de l'ailette mobile (17).

2. Appareil de volet de calandre (10, 30) selon la revendication 1, dans lequel
le passage d'admission (23, 43) est prévu d'une manière telle que le passage d'admission (23, 43) comprend une partie d'ouverture du côté amont (23a, 42a) et une partie d'ouverture du côté aval (23b, 42b) qui sont positionnées de manière respective au niveau d'un côté amont et au niveau d'un côté aval par rapport à chaque ailette mobile (17, 37) dans la direction d'écoulement d'entrée de l'air qui s'écoule depuis la partie d'ouverture de calandre (7), et
la partie d'ouverture du côté amont (23a, 42a) et la partie d'ouverture du côté aval (23b, 42b) sont empêchées de se chevaucher l'une l'autre dans la direction d'écoulement d'entrée de l'air dans un cas où chaque ailette mobile (17, 37) est dans l'état complètement fermé.

3. Appareil de volet de calandre (10) selon la revendication 1 ou 2, dans lequel
l'ailette mobile (17, 47, 57) est prévue dans une pluralité de positions et la pluralité d'ailettes mobiles (17, 47, 57) est disposée dans au moins deux rangées qui sont adjacentes de manière parallèle l'une à l'autre, et
chaque ailette mobile (17, 47, 57) réalise l'opération d'ouverture/fermeture par rotation et forme le passage d'admission (23) entre les ailettes mobiles (17, 47, 57) des rangées adjacentes dans un état où chaque ailette mobile (17, 47, 57) est dans l'état complètement fermé.

4. Appareil de volet de calandre (10) selon la revendication 3, dans lequel chaque ailette mobile (17) comprend un arbre rotatif (20) qui est décalé dans la direction d'écoulement d'entrée de l'air par rapport à l'ailette mobile (17) de la rangée adjacente.

5. Appareil de volet de calandre (10) selon la revendication 3 ou 4, dans laquelle chaque ailette mobile (47, 57) est formée d'une manière telle que la partie d'extrémité d'ailette (21) de chaque ailette mobile (47, 57) est positionnée pour être décalée par rapport à l'arbre rotatif (20) dans la direction d'écoulement d'entrée de l'air dans un cas où chaque ailette mobile (47, 57) est dans l'état complètement fermé.

6. Appareil de volet de calandre (30) selon l'une quelconque des revendications 1 ou 2, dans lequel le passage d'admission (43) est constitué par un trou débouchant (42) prévu au niveau de l'ailette mobile (37).

7. Appareil de volet de calandre (30) selon la revendication 6, dans lequel le trou débouchant (42) procure un passage d'admission (43) s'étendant dans une direction coupant une direction d'écoulement d'entrée de l'air s'écoulant depuis la partie d'ouverture de calandre (7) dans un cas où l'ailette mobile (37) est dans l'état complètement fermé.

8. Appareil de volet de calandre (30) selon la revendication 6 ou 7, dans lequel
le trou débouchant (42) est prévu d'une manière telle que le trou débouchant (42) comprend une partie d'ouverture du côté amont (42a) et une partie d'ouverture du côté aval (42b) qui sont positionnées de manière respective au niveau d'un côté amont et au niveau d'un côté aval par rapport à l'ailette mobile (37) dans une direction d'écoulement d'entrée de l'air s'écoulant depuis la partie d'ouverture de calandre (7) dans un cas où l'ailette mobile (37) est dans l'état complètement fermé, et
la partie d'ouverture du côté amont (42a) et la partie d'ouverture du côté aval (42b) sont empêchées de se chevaucher l'une l'autre dans la direction d'écoulement d'entrée de l'air dans un cas où l'ailette mobile (37) est dans l'état complètement fermé.
